# EUROPÄISCHE PATENTSCHRIFT

(11) **EP 0 603 702 B1**
(45) Veröffentlichungstag und Bekanntmachung des Hinweises auf die Patenterteilung: **10.03.1999**
(21) Anmeldenummer: 93120069.5
(22) Anmeldetag: 13.12.1993
(51) Int. Cl.: B01J 2/20, B29B 9/10

(54) **Vorrichtung zur Herstellung von Granulat**
Apparatus for producing granules
Appareil pour produire des granules

(30) Priorität: 24.12.1992 DE 4244035
(43) Veröffentlichungstag der Anmeldung: 29.06.1994
(73) Patentinhaber: Santrade Ltd., CH-6002 Luzern (CH)
(72) Erfinder: Froeschke, Reinhard, D-71384 Weinstadt (DE)
(74) Vertreter: Wilhelm & Dauster Patentanwälte European Patent Attorneys

(56) Entgegenhaltungen:
- EP-A- 0 145 839

## Beschreibung

Die Erfindung betrifft eine Vorrichtung zur Herstellung von Granulat aus schmelzfähigen Massen, bestehend aus einem ersten zylindrischen Hohlkörper, der zumindest einseitig ortsfest gelagert ist, innen mit der zu granulierenden Masse beaufschlagt, und mit mindestens einer nach unten weisenden Reihe von Öffnungen versehen ist, und aus einem zweiten, am Umfang des ersten Körpers anliegenden zylindrischen Außenrohr, das drehbar in Wälzlagern auf dem inneren Hohlkörper gelagert und mit auf seinem gesamten Umfang angeordneten Öffnungen versehen ist, die zyklisch mit den Öffnungen des inneren Hohlkörpers zur Deckung kommen, wobei eine axiale Abdichtung zwischen den Enden des rotierenden Außenrohres und den feststehenden Lagerteilen vorgesehen ist.

Eine solche Vorrichtung ist zur Durchführung des sogenannten Rotoform Verfahrens bekannt (siehe Prospekt Sandvik Rotoform Verfahren der Sandvik Process Systems GmbH in 7012 Fellbach, Druckvermerk: PS 500 GER 3.92). Bei diesen bekannten Bauarten wird der Endflansch des rotierenden Außenrohres drehfest mit einem Lagerring verbunden, der zur Abstützung an Wälzlagern dient, die mit ihrem Innenring fest mit dem feststehenden inneren Hohlkörper verbunden sind. Die axiale Abdichtung zwischen dem Flansch des Außenrohres und dem feststehenden inneren Lagerteil wird durch einen mit dem Flansch des Außenrohres verbundenen Abdichtring und einen mit diesem zusammenarbeitenden an dem feststehenden Lagerkörper angebrachten Dichtring erreicht. Dieser letztere Dichtring wird axial durch ein Tellerfederpaket gegen den ersten Dichtring gedrückt, das stirnseitig am feststehenden Hohlkörper angeordnet ist. Bei diesen Bauarten kann es vorkommen, daß Produktmassen, insbesondere wenn sie relativ dünnflüssig sind, aus dem Raum zwischen feststehendem inneren Hohlkörper und rotierendem Außenrohr an undichten Stellen der Dichtung durchtreten und in den Bereich des Lagers kommen, sich dort verfestigen und zu einer Funktionsbeeinträchtigung, unter Umständen sogar zum zeitweisen Ausfall der Produktion führen können.

Der vorliegenden Erfindung liegt daher die Aufgabe zugrunde, eine Vorrichtung zur Herstellung von Granulat der eingangs genannten Art so auszubilden, daß die Gefahr der Beeinträchtigung der Lagerung durch an der Dichtung eventuell austretendes Produkt sicher vermieden wird. Zur Lösung dieser Aufgabe wird vorgeschlagen, daß der Lageraußenring des Wälzlagers in einer das Lager in Richtung zu dem rotierenden Außenrohr übergreifenden Glocke befestigt ist, die fest auf dem inneren Hohlkörper sitzt, daß der Innenring des Lagers auf einem in Umfangsrichtung mit dem rotierenden Außenrohr verbundenen Tragring sitzt, der an der Innenwand der Glocke axial abdichtend anliegt, und daß der in der Glocke im Bereich der Dichtung gebildete Ringraum eine nach unten offene Austrittsöffnung aufweist.

Durch diese Ausgestaltung wird der Vorteil erreicht, daß Material, das gegebenenfalls im Bereich der Dichtung durchtritt, durch die nach unten weisende Austrittsöffnung in der Glocke nach unten abtropfen kann und so an jeder Möglichkeit gehindert ist, das Lager zu verunreinigen. Ein weiterer, nicht unerheblicher Vorteil der erfindungsgemäßen Lagerung ist darin zu sehen, daß der nach außen weisende Teil des Lagers feststehend ist, und daher auch unter dem Gesichtswinkel des Unfallschutzes als Sicherheitsabdeckung für die ausschließlich innenliegenden rotierenden Teile angesehen werden kann.

Die neue Ausgestaltung weist auch den Vorteil auf, daß nunmehr die Dichtung in relativ einfacher Weise aus einem fest in die Stirnseite des Tragringes eingesetzten Graphitring und aus einem in der inneren Stirnwand der feststehenden Glocke sitzenden Gegenring aufgebaut werden kann, der in an sich bekannter Weise durch Druckfedern, die in der ortsfesten Glocke auf dem Umfang verteilt angeordnet sind, gegen den Graphitring gedrückt werden kann. Die Anordnung eines Tellerfederpaketes, das auf eine stirnseitige Haube der Lagerung zum Zweck der Dichtung drückt, wird überflüssig.

In vorteilhafter Weiterbildung kann außerdem vorgesehen werden, daß der mit dem Außenrohr verbundene Tragring des Lagers auf der Antriebsseite des Außenrohres die Innenringe von zwei Wälzlagern aufnimmt, zwischen denen ein Zahnrad für den Antrieb des Außenrohres sitzt, das fest mit dem Tragring verbunden ist. Der Tragring dient daher auch zur Übertragung der Antriebskraft.

Schließlich ist es auch noch in vorteilhafter Weise möglich, den Tragring durch die Kraft der Druckfedern der Abdichtung gegen einen Endflansch des Außenrohres zu drücken und ihn so auszulegen, daß er ausschließlich über parallel zur Achse des inneren Hohlkörpers und des Außenrohres verlaufende Zylinderstifte oder dergleichen mit dem Endflansch des Außenrohres in Umfangsrichtung fest verbunden ist. Diese Ausgestaltung eröffnet nämlich den Vorteil, daß sich der Tragring mit der gesamten Lagerung axial vom feststehenden Hohlkörper abziehen läßt. Die beiden miteinander in Berührung stehenden Dichtringe werden daher bei einer notwendigen Demontage des Außenrohres nicht auseinandergerissen. Dies weist entscheidende Vorteile auf. Dadurch, daß die Dichtung nicht auseinandergerissen wird, wird auch sicher verhindert, daß bei der Demontage zunächst noch viskose und später erhärtende Massen in den Bereich der Dichtung kommen, die dann vor einer Montage in relativ aufwendiger Weise wieder von den Dichtringen entfernt werden muß.

Die Erfindung ist in der Zeichnung anhand eines Ausführungsbeispieles dargestellt, und wird im folgenden erläutert. Es zeigen:
- Fig. 1: eine schematische Ansicht einer erfindungsgemäßen Vorrichtung, die über einem laufenden Kühlband angeordnet ist,
- Fig. 2: die vergrößerte Darstellung des Längsschnittes durch die rechte Lagerung des rotierenden Außenrohres auf einem feststehenden inneren Hohlkörper,
- Fig. 3: die vergrößerte Darstellung der linken Lagerung des rotierenden Außenrohres, und
- Fig. 4: den Teilschnitt nach der Schnittlinie IV in Fig. 3.

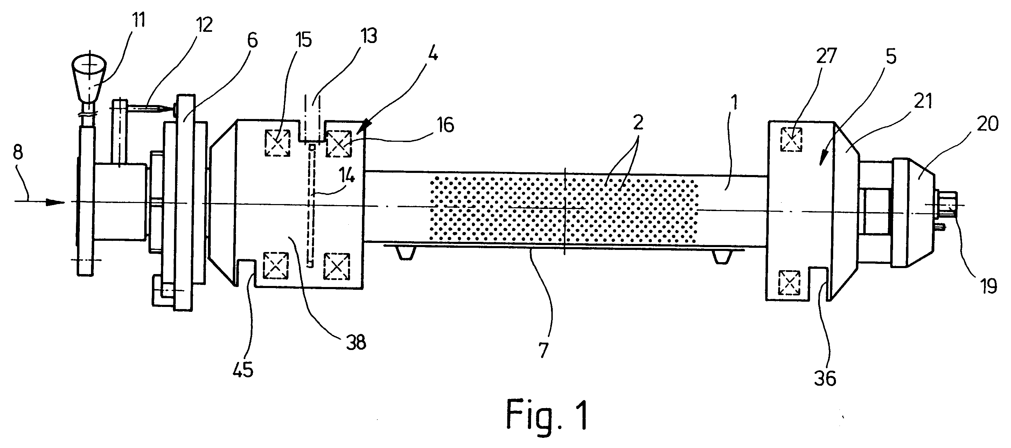

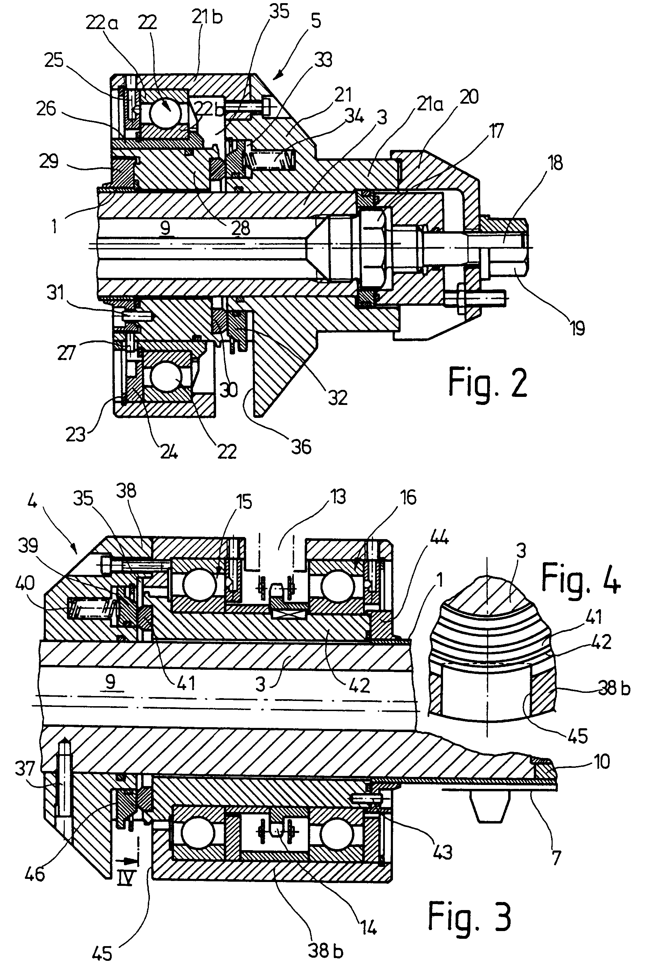

In der Fig. 1 ist schematisch ein sogenannter Rotoformer gezeigt, der in an sich bekannter Weise aus zwei relativ zueinander drehbaren zylindrischen Körpern besteht. Der äußere dieser zylindrischen Körper bildet dabei ein Außenrohr (1), das in seinem mittleren Bereich über den ganzen Umfang mit Öffnungen (2) mit einem bestimmten Durchmesser versehen ist. Dieses Außenrohr (1) ist drehbar auf einem inneren Hohlzylinder (3) gelagert, der aus den Fig. 2 und 3 ersichtlich ist, in der Fig. 1 allerdings nicht zu erkennen ist. Das Außenrohr (1) ist mit Hilfe der beiden Lageranordnungen (4 bzw. 5), die in vergrößerter Darstellung in den Fig. 3 bzw. 2 dargestellt sind, drehbar auf dem feststehenden inneren Hohlkörper (3) gelagert. Der innere Hohlkörper wird dabei fliegend an einem seitlichen Lagerschild (6) gehalten, der in nicht näher dargestellter Weise gegenüber einem endlosen Kühlband (7) so einstellbar ist, daß das auf dem Innenkörper (3) angeordnete Außenrohr (1) in einen bestimmten Abstand zu dem Kühlband (2) kommt. Gegenüber dem Lagerschild (6) ist der Innenkörper (3) in ebenfalls bekannter Weise noch einmal um einen bestimmten Winkel verstellbar. Der Innenkörper (3) besitzt nämlich im Bereich des drehbaren Außenrohres (1) einen ausschließlich nach unten weisenden Austrittsschlitz mit einer Düsenleiste für das durch die Zuführung (8) in seinen Innenraum (9) (siehe Fig. 2 und 3) gelangende und zu vertropfende Material. Dieses Material kann durch den nach unten weisenden Schlitz mit der in der Fig. 3 schematisch angedeuteten Düsenleiste (10) nach unten austreten, und zwar dadurch, daß die auf Mantellinien des Außenrohres (1) angeordneten Öffnungen (2) bei der Relativdrehung des Außenrohres (1) gegenüber dem Innenkörper (3) zyklisch mit den Öffnungen in der Düsenleiste (10) in Kontakt kommen. Dabei wird das im Inneren des Innenkörpers (3) unter Druck stehende viskosflüssige Material nach unten abgetropft und fällt entweder auf das Kühlband (7), oder wird durch Kontakt mit diesem aus den Öffnungen herausgezogen. Der Abtropfpunkt läßt sich durch eine gewisse Verdrehung des Innenkörpers zu einer durch die Achse des Außenrohres (3) verlaufenden Vertikalebene verstellen. Dies geschieht mit Hilfe des Handhebels (11). Die Stellung des Innenkörpers wird dann über einen Zeiger (12) auf einer Skala an dem Lagerschild (6) angezeigt.

Auf dem so in an sich bekannter Weise fliegend über dem Kühlband (7) gehaltenen Innenkörper (3) ist das Außenrohr (1) mit Hilfe der beiden Lageranordnungen (4) und (5) drehbar angeordnet. Der Drehantrieb für das Außenrohr (1) erfolgt über eine Kette (13), die mit einem Zahnrad (14) zusammenwirkt, das im einzelnen aus Fig. 3 zu erkennen ist und das zwischen zwei Wälzlagern (15) und (16) der Lageranordnung (4) sitzt.

Aus der Fig. 2 ist zu erkennen, daß sich im inneren Hohlraum des Hohlkörpers (3) eine Schraube (17) befindet, die zum einen zur Montage des Hohlkörpers (3) am Lagerschild (6) dient, und zum anderen mit einem Gewindezapfen (18) aus der Stirnseite des Hohlkörpers (3) herausragt und dort mit einer Mutter (19) versehen ist, mit der eine Haube (20) gegen den Schaft (21a) einer Glocke (21) drückt, die auf diese Weise fest mit dem inneren Hohlkörper (3) verbunden ist. Die Glocke (21) besitzt einen außen umlaufenden Ring (21b), in dem der Lageraußenring (22a) des Wälzlagers (22) sitzt. Der Lageraußenring (22a) wird durch einen im Ring (21b) umlaufenden und durch einen Sicherungsring (23) gehaltenen Ring (24) gesichert, der eine radiale Zuführöffnung (25) zur Schmierung des Wälzlages (22) besitzt.

Der Innenring (22b) des Wälzlagers (22) ist auf einen Ring (26) aufgepresst, der seinerseits durch einen radial verlaufenden Stift (27) drehfest mit einem Tragring (28) verbunden ist, der auf der zum rotierenden Außenrohr (1) weisenden Seite mit einem fest auf dem Außenrohr (1) verschweißtem Flansch (29) und auf der anderen Seite mit einem mit ihm umlaufenden Dichtring (30) versehen ist, der aus verschiedenen Materialien, z.B. aus Graphit bestehen kann. Der Tragring (28) ist drehfest mit dem Flansch (29) durch einen - oder mehrere - axial verlaufenden Sicherungsstift (31) verbunden. Sein Dichtring (30) wirkt mit einem Dichtring (32) zusammen, der in einer Nut (33) in der inneren radial verlaufenden Stirnwand der Glocke (21) axial verschiebbar angeordnet ist und durch eine Reihe von Druckfedern (34) gegen den Dichtring (30) gedrückt wird.

Die Glocke (21) bildet somit im Bereich der Dichtung (30, 32) einen Ringraum (35), der mit einer nach unten weisenden Öffnung (36) versehen ist, auf deren Bedeutung noch eingegangen wird. Die Öffnung (36) reicht dabei, wie Fig. 2 zeigt, vom Grund der Nut (33) aus nach unten.

Der Aufbau der Lageranordnung (4) ist ähnlich. Auch hier ist über einen Radialbolzen (37) eine Glocke (38) drehfest mit dem inneren Hohlkörper (3) verbunden. In dieser Glocke (38) sitzt wiederum ein axial beweglicher Dichtring (39), der mit Hilfe von Druckfedern (40) gegen einen Dichtring (41) gedrückt wird. Dieser Dichtring (41), der ebenfalls aus verschiedenen Materialien, z.B. aus Graphit bestehen kann, liegt auf der vom rotierenden Außenrohr (1) abgewandten Seite eines Tragringes (42) an, der wiederum drehfest über den axial verlaufenden Stift (43) - oder über mehrere solche Stife - drehfest mit dem Flansch (44) verbunden ist, der ebenfalls mit dem Außenrohr (1) verschweißt ist. Unterschiedlich ist, daß hier auf dem Tragring (42) die beiden Wälzlager (15 und 16) sitzen, deren jeweilige Außenringe in der feststehenden Glocke (38) angeordnet sind, während ihre Innenringe auf dem Tragring (42) sitzen. Zwischen den beiden Wälzlagern sitzt das Zahnrad (14), das über die Kette (13) den Antrieb des Außenrohres (1) erlaubt.

Wie aus der Schnittdarstellung Fig. 4 erkennbar ist, ist auch in der Glocke (38) im Bereich der Dichtung (39, 41) eine nach unten weisende Öffnung (45) vorgesehen, deren vom Außenrohr (1) abgewandte Seitenwand vom Grund der Nut (46) ausgeht, die wiederum zur Aufnahme des Dichtungsringes (39) dient.

Die in den Fig. 1 bis 4 gezeigte Ausführung weist den Vorteil auf, daß eventuell in dem Zwischenraum zwischen Hohlkörper (3) und Außenrohr (1) befindliches Material, das an den Lagerringen (28) bzw. (42) vorbei bis zur jeweiligen Dichtungsanordnung (30, 32) bzw. (39, 41) gelangt und dort möglicherweise zum Teil austritt, durch die nach unten führende Öffnung (45) austreten kann, ohne daß die Gefahr besteht, daß solches Material in den Bereich der Wälzlager (22) oder (15) gelangt. Es hat sich gezeigt, daß die feste Anordnung der Glocken (21) bzw. (38) natürlich auch den Vorteil aufweist, daß die neue Lageranordnung sehr sicher ist, weil sich außen nur feststehende, und keine drehbaren Teile befinden. Sowohl der Außenring (21b), als auch der Außenring (38b) der Glocke (21) bzw. der Glocke (38) stehen fest. Die in diesen feststehenden Teilen angeordneten, nach unten offenen Öffnungen (36) und (45), verhindern eine Beeinträchtigung der Lageranordnung auf einfache Weise.

Wie aus der Betrachtung der Fig. 2 ohne weiteres klar wird, kann bei einer Wartung des erfindungsgemäß ausgestalteten Rotoformers nach dem Lösen der Mutter (19) und gegebenenfalls nach Abnahme der Haube (20) die gesamte Glocke (21) mit dem Lager (5) nach rechts vom inneren Hohlkörper (3) abgezogen werden. Dabei wird auch der Tragring (28) über das Wälzlager (22) mitgenommen, so daß die aus den beiden Ringen (30) und (32) bestehende Dichtung auch bei einer Demontage nicht auseinandergerissen wird. Eine Verschmutzung der Dichtringe wird sicher vermieden, die sich bei der Demontage nicht voneinander trennen. In gleicher Weise läßt sich die Glocke (38) abziehen, wobei auch hier die gesamte Anordnung mit dem Tragring (42) von dem Flansch (44) des Außenrohres (1) axial abgezogen werden kann.

## Patentansprüche

1. Vorrichtung zur Herstellung von Granulat aus schmelzfähigen Massen, bestehend aus einem ersten zylindrischen Hohlkörper (3), der zumindest einseitig ortsfest gelagert und innen mit der zu granulierenden Masse beaufschlagt, sowie mit mindestens einer nach unten weisenden Reihe von Öffnungen (10) versehen ist, und aus einem zweiten, am Umfang des ersten Körpers anliegenden zylindrischen Außenrohr (1), das drehbar in Wälzlagern (15, 16, 22) auf dem inneren Hohlkörper gelagert und mit auf seinem gesamten Umfang angeordneten Öffnungen (2) versehen ist, die zyklisch mit den Öffnungen des inneren Hohlkörpers zur Deckung kommen, wobei eine axiale Abdichtung (30, 32) bzw. (39, 41) zwischen den Enden des rotierenden Außenrohres und den feststehenden Lagerteilen vorgesehen ist, dadurch gekennzeichnet, daß der Lageraußenring (22a) der Wälzlager in jeweils einer das Lager in Richtung zu dem rotierenden Außenrohr (1) übergreifenden Glocke (21) bzw. (38) befestigt ist, die fest auf dem inneren Hohlkörper (3) sitzt, daß der Innenring (22b) der Lager (15, 16, 22) auf einem in Umfangsrichtung mit dem rotierenden Außenrohr verbundenen Tragring (28, 42) sitzt, der an der Innenwand der Glocke abdichtend anliegt, und daß in der Glocke (21) bzw. (38) im Bereich der Dichtung (30, 32) bzw. (39, 41) ein Ringraum (35) gebildet ist, der eine nach unten offene Austrittsöffnung (45, 36) aufweist.

2. Vorrichtung nach Anspruch 1, dadurch gekennzeichnet, daß als Dichtung ein fest in die Stirnseite des Tragringes (28) bzw. (42) eingesetzter Dichtring (30, 41) und ein in der inneren Stirnwand der Glocke (21) bzw. (38) sitzender Gegenring (32) bzw. (39) vorgesehen ist, der durch Druckfedern (34) bzw. (40), die in der ortsfesten Glocke (21) bzw. (38) auf dem Umfang verteilt angeordnet sind, gegen den zugeordneten Dichtring gedrückt wird.

3. Vorrichtung nach Anspruch 1, dadurch gekennzeichnet, daß der mit dem Außenrohr (1) verbundene Tragring (42) des Lagers (4) auf der Antriebsseite des Außenrohres die Innenringe von zwei Wälzlagern (15, 16) aufnimmt, und daß ein Zahnrad (14) für den Antrieb des Außenrohres (1) fest mit dem Tragring (42) verbunden ist.

4. Vorrichtung nach Anspruch 3, dadurch gekennzeichnet, daß das Zahnrad (14) zwischen den Wälzlagern (15, 16) sitzt.

5. Vorrichtung nach Anspruch 2, dadurch gekennzeichnet, daß der Tragring (28, 42) ausschließlich über parallel zur Achse des Außenrohres (1) verlaufenden Zylinderstifte (31, 43) mit dem Endflansch (29) bzw. (44) in Umfangsrichtung fest verbunden ist.

6. Vorrichtung nach Anspruch 5, dadurch gekennzeichnet, daß der Tragring (28, 42) jeweils durch die Kraft der Druckfedern (34, 40) gegen einen Endflansch (29) bzw. (44) des Außenrohres (1) gedrückt ist.

## Claims

1. A device for producing granulate from fusible materials, consisting of a first cylindrical hollow body (3), which is mounted at least on one side to be stationary and to the interior of which the material to be granulated is fed, and being provided with at least one downwardly directed row of orifices (10), and, adjoining the circumference of the first body, a second, cylindrical outer pipe (1) which is rotatably mounted on the inner hollow body in roller bearings (15, 16, 22) and provided with orifices (2) arranged across its entire circumference, which are moved in cycles to cover over the orifices of the inner hollow body, an axial seal (30, 32) and (39, 41) being provided between the ends of the rotating outer pipe (1) and the fixed bearing parts, characterised in that the bearing outer ring (22a) of the roller bearings is secured in a respective cap (21) and (38) which overlaps the bearing in the direction towards the rotating outer pipe (1) and which is permanently seated on the inner hollow body (3), the inner ring (22b) of the bearings (15, 16, 22) sits on a thrust collar (28, 42) which is joined to the rotating outer pipe in the circumferential direction and lies against the inner wall of the cap providing a seal and an annular chamber (35) is formed in the cap (21) and (38) in the region of the seal (30, 32) and (39, 41) having an outlet orifice (45, 36) opening downwards.

2. A device as claimed in claim 1, characterised in that sealing is provided in the form of a sealing ring (30, 41) inserted firmly in the front face of the thrust collar (28) and (42) and a counter ring (32) and (39) seated in the inner end wall of the cap (21) and (38), which is biassed towards the associated sealing ring by means of compression springs (34) and (40) arranged distributed along the circumference in the stationary cap (21) and (38).

3. A device as claimed in claim 1, characterised in that the thrust collar (42) of the bearing (4) joined to the outer pipe (1) receives the inner rings of two roller bearings (15, 16) at the drive end and a gear (14) for driving the outer pipe (1) is permanently joined to the thrust collar (42).

4. A device as claimed in claim 3, characterised in that the gear (14) sits between the roller bearings (15, 16).

5. A device as claimed in claim 2, characterised in that the thrust collar (28, 42) is permanently joined exclusively by means of cylindrical pins (31, 43) running parallel with the axis of the outer pipe (1) to the end-flange (29) and (44) in the circumferential direction.

6. A device as claimed in claim 5, characterised in that the thrust collar (28, 42) is compressed respectively by the force of the compression springs (34, 40) against an end-flange (29) and (44) of the outer pipe.

## Revendications

1. Dispositif pour fabriquer des granulés à partir de masses pouvant fondre, comprenant un premier corps creux (3) cylindrique, qui est logé de façon fixe au moins sur un côté et est alimenté à l'intérieur avec la masse à granuler, et est pourvu d'au moins une série d'ouvertures (10) orientées vers le bas, et un deuxième tube extérieur (1) cylindrique venant s'appuyer contre le premier corps, lequel tube est logé de façon pivotante dans des paliers à roulement (15, 16, 22) sur le corps creux intérieur et est pourvu d'ouvertures (2) disposées sur l'ensemble de la périphérie, lesquelles coïncident de façon cyclique avec les ouvertures du corps creux intérieur, un joint d'étanchéité axial (30, 32) ou (39, 41) étant prévu entre les extrémités du tube extérieur rotatif et les parties de palier fixes, caractérisé en ce que la bague extérieure de palier (22a) de chaque palier à roulement est fixée dans une cloche (21) ou (38) recouvrant le palier en direction du tube extérieur (1) rotatif, laquelle cloche est logée de façon fixe sur le corps creux (3) intérieur, en ce que la bague intérieure (22b) des paliers (15, 16, 22) est logée sur une bague support (28, 42) reliée dans le sens périphérique au tube extérieur rotatif, laquelle bague vient s'appuyer de façon étanche sur la paroi intérieure de la cloche, et ce que, dans la cloche (21) ou (38) et dans la zone du joint (30, 32) ou (39, 41) est formé un compartiment annulaire (35) qui présente une ouverture de sortie (45,36) ouverte vers le bas.

2. Dispositif selon la revendication 1, caractérisé en ce qu'il est prévu comme joint une bague d'étanchéité (30, 41) insérée de façon fixe sur la face avant de la bague support (28) ou (42) et une contre-bague (32) ou (39) reposant dans la paroi frontale intérieure de la cloche (21) ou (38), laquelle bague est appuyée contre la bague d'étanchéité attribuée par des ressorts de pression (34) ou (40), qui sont répartis à la périphérie dans la cloche fixe (21) ou (38).

3. Dispositif selon la revendication 1, caractérisé en ce que la bague support (42), reliée au tuyau extérieur (1), du palier (4) reçoit sur le côté entraînement du tube extérieur les bagues intérieures de deux paliers à roulement (15,16), et en ce qu'une roue dentée (14) pour l'entraînement du tube extérieur (1) est reliée de façon fixe à la bague support (42).

4. Dispositif selon la revendication 3, caractérisé en ce que la roue dentée (14) est logée entre les paliers à roulement (15, 16).

5. Dispositif selon la revendication 2, caractérisé en ce que la bague support (28, 42) est reliée de façon fixe à la bride d'extrémité (29) ou (44) dans le sens périphérique exclusivement par des goupilles cylindriques (31, 43) parallèles à l'axe du tuyau extérieur (1).

6. Dispositif selon la revendication 5, caractérisé en ce que la bague support (28, 42) est appuyée respectivement par la force des ressorts de pression (34, 40) contre une bride d'extrémité (29) ou (44) du tuyau extérieur (1).
